# EUROPEAN PATENT APPLICATION

(11) **EP 1 383 349 A2**
(43) Date of publication of application: **21.01.2004**
(21) Application number: 03016172.3
(22) Date of filing: 16.07.2003
(51) Int. Cl.: H04Q 7/32, H04L 12/24

(54) **Method and device for managing user settings of a network terminal**

(30) Priority: 16.07.2002 JP 2002206790
(71) Applicant: MATSUSHITA ELECTRIC INDUSTRIAL CO., LTD., Kadoma-shi, Osaka 571-8501 (JP)
(72) Inventor: Yuki, Yasuhiro, Fujisawa-shi, Kanagawa 252-0804 (JP); Yamada, Kazunori, Yokohama-shi, Kanagawa 224-0053 (JP); Uenoyama, Tsutomu, Kawasaki-shi, Kanagawa 210-0022 (JP)
(74) Representative: Grünecker, Kinkeldey, Stockmair & Schwanhäusser Anwaltssozietät

(57) **Abstract**

A quantity of communication burden on a user is to be alleviated, and resetting of a terminal ensuing from user replacement is to take no time or a minimum length of time. To this end, there is provided a user decision unit which has a user list in which users having experience of using the terminal if only once can be referenced and registered as users and controls the resetting of terminal setting information by inquiring about the presence or absence of the user's experience of using the terminal. Further, a mechanism to hold setting information, which would otherwise be initialized after the user is replaced, as a user list to which management numbers which are valid only in the terminal are added in a region separate from the setting information region for terminal users even after the user replacement. This arrangement can dispense with the initialization of setting information for users having experience of using the terminal if only once, and the resetting of setting information, which would otherwise be required at the time of user replacement for every user, can be realized by replacing the setting information in current use with the setting information for users.

## Description

### BACKGROUND OF THE INVENTION

### Field of the Invention

The present information relates to a mobile terminal to be connected to a network, and more particularly to terminal setting information management in a case where a plurality of users are to use the same terminal in the realization of remote terminal management at a mobile terminal, typically a mobile telephone.

### Description of the Prior Art

Over the years, network-connectable mobile information terminal devices (hereinafter to be referred to as simply "terminals"), typically mobile radio telephone terminals, have developed centering essentially on remote radio communication, and achieved particular advancements in such hardware aspects as reductions in weight and size, durability of the battery charge and sound quality. In more recent years, services available on terminals, for instance such software functions as browsing via the Internet and e-mail transmission/reception have tended to become increasingly complex. On account of these circumstances, the user IDs and passwords needed for receiving such services, network information to be used, information on the server at the destination, the data format to be used and other kinds of setting information have also become more complex.

It is defined here that, when a terminal is used, information to identify the user of the terminal, who does not rewrite information, on the network to which this terminal belongs is to be referred to as user information and that, conversely, information rewritten by the user when he or she is to use the terminal is to be referred to as terminal setting information. For instance, information indicating the communications operator (hereinafter referred to as "carrier" ) to whom the subject user subscribes and information provided by the carrier to the user, such as the user's telephone number, are items of user information. Items of setting information required by the subject user in his or her use of the terminal, such as the user's name and password for the service the user has selected on the terminal, the connection server address and remotely acquired application data, are items of terminal setting information.

As far as the available range of these services is clear, it was usual for the terminal manufacturer (hereinafter referred to as "vendor") to set in advance, at the time of releasing the terminal, terminal setting information within the terminal, and for the user to rewrite it on his or her own as necessary.

More recently, however, for the purpose of maintaining and even improving the terminal performance by providing additional or updated setting information to already released terminals as well, the need is rising for resetting setting information held within such terminals by remote communication from a distant source by way of the network.

This proposed arrangement to have a distantly located terminal management server manage user terminals via the network by adding to, modifying or deleting from setting information at terminals is known as remote terminal management, sometimes referred to as provisioning, and it is discussed among standardization organizations.

The usual way to realize such an arrangement for terminal management is to make ready, in a place different from user terminals such as on a communicable network, a terminal management server to hold setting information for terminal management on a user-by-user basis, and connect terminals to the terminal management server via the network to receive terminal management service so that user-matched terminal management setting information can be remotely acquired. At the start of terminal management service, the terminal management server has to initialize for the pertinent terminal the setting information to be handled. This is required not only for a terminal to be used for the first time but also when the user of a terminal is replaced. Where one terminal is shared by a plurality of users, terminal setting information matching the user needs to be set within the terminal, namely to be remotely acquired, every time the user changes.

Such cases in which a single terminal is shared by a plurality of users are likely to increase from now on along with the diversification of mobile terminals exemplified by the functional sophistication of mobile radio telephone terminals and the advent of Personal Digital Assistant (PDA) terminals and dedicated card terminals for data communication. For instance, when user information is to be recorded on an external storage medium such as a Subscriber Identity Module (SIM) card used with a Global System for Mobile Communications (GSM) terminal, one user may use the same SIM card with a plurality of terminals to receive different kinds of services, changing from one terminal to another. To look at each individual terminal, it is conceivable for a plurality of users to share one terminal. For instance, a company may make available a PDA terminal for common use by its employees, each of whom can use the common terminal with his or her SIM card. It is becoming increasingly common for a single terminal to be used by a plurality of users.

One of the known systems to enable a single terminal to identify each of a plurality of users (subscribers) is described in the Japanese Patent Disclosure No. 214367/1996. The main structure of this multiple user identifying system comprises a memory unit for storing subscriber ID information for a plurality of subscribers (users) within the terminal, a controller for controlling it, a standard telephone interface for providing telephone service, and a plurality of card readers for reading external storage media. In this system, any one of the plurality of users registered with a terminal is enabled to receive telephone service when the controller identifies the user out of the list of the plurality of users, either inside or outside, to which the terminal refers.

To consider the use of SIM cards from the viewpoint of telephone service, the multiple user identifying system described in the Japanese Patent Disclosure No. 214367/1996 cited above may seem to offer a solution to the problems involved, but if receiving remote terminal management service is presupposed, it will be necessary to remotely acquire via the network terminal setting information, which differs from user to user, matching each user on the basis of user information in order to reset terminal setting information.

Usually in realizing remote terminal management, the setting information configurations of the service receiving terminal and of the service providing terminal management server are required to be such that setting information matching the replacing terminal user be made ready on the part of the terminal and setting information for terminal management after the replacement of the terminal user be made ready on the part of the terminal management server.

However, according to the invention described in the Japanese Patent Disclosure No. 214367/1996 cited above, even if supply of telephone service differentiated from user to user, i.e. resetting of terminal setting information regarding connection setting information required for connection to the network provided by the carrier including the basic user information defining the usable carrier, the user's telephone number and the like and the gateway number and the access point name of the network used, is realized, supply of terminal management service cannot be realized on account of the absence of a mechanism for resetting of service setting information required for receiving terminal setting information differing from user to user, such as the user's name and password, the connection server address or other service setting information required for receiving service offered by the carrier or general service companies.

Even if a terminal using the invention described in the Japanese Patent Disclosure No. 214367/1996 sets terminal setting information intended for remote terminal management service in the terminal, there will still be problems that setting information should be acquired by remote communication every time a user is identified, and its resetting will take time.

To cite an example of resetting terminal setting information by changing the SIM card inserted into the GSM terminal, it will be done by establishing connection to the terminal management server via the network and acquiring terminal setting information by remote communication at the time of altering user information, namely when changing the external storage medium, to initialize setting information which differs from user to user and to reset setting information of the newly recognized user in the terminal.

By this method, however, at the time of replacing the external storage medium, the terminal setting information of even a user having experience of using this terminal at least once, namely a user having experience of setting terminal setting information, is discarded by initialization, the terminal has to seek connection with the terminal management server every time it recognizes a user. For this reason, it involves a number of problems including a burden on users in terms of the quantity of communication, a risk of failure to reset terminal setting information due to line cut-off of remote communication and a length of time taken to reset acquisition by remote communication.

An object the present invention, attempted to solve the problems noted above, is to reduce the burden on users in terms of the quantity of communication, unavoidable by any conventional method, and in altering user information, to eliminate or at least minimize the length of time required for terminal resetting.

### SUMMARY OF THE INVENTION

In order to solve the problems noted above, an information terminal device according to a first aspect of the present invention has a user list in which a user having experience of using the information terminal device if only once can be referenced and registered as a user; a user decision unit for controlling the resetting of terminal setting information by inquiring of the user list as to whether or not the replacing user has experience of using this information terminal device; and a mechanism to hold setting information, which would otherwise be initialized after the replacement of the user, is held in a region separate from the setting information region for the users of the information terminal device even after the user is replaced as a user list in which a management number, which is valid only within the information terminal device, is added. In this way, since no initialization of setting information is required of a user having experience of using this information terminal device if only once and setting information linked with the user is held within the information terminal device, resetting of setting information, which would otherwise be required for every user every time the user is replaced, can be realized by replacing the setting information currently in use with setting information for the replacing user. As a result, no acquisition of setting information from a terminal management server via a network by remote communication is required. This provides an advantage that no communication is needed for resetting of terminal setting information and that the resetting of terminal setting information can be completed in the minimum necessary length of time.

According to a second aspect of the invention, the user list to be referenced by the user list storage unit has a flag management function for setting information shared among users. In this way, duplicated storing of setting information to be shared by users, such as user-independent setting information including hardware information or a definition file for anti-virus software, can be avoided, and savings in storage area for setting information and its more efficient management can be thereby realized.

According to a third aspect of the invention, a group list to be referenced by the user list storage unit is newly provided to make available a mechanism of controlling the setting of a plurality of user groups. By giving group attributes on the user list to a plurality of users of the information terminal device, it is made possible for users in the same group to share setting information in the group. This results in the advantage of reducing or even eliminating remote communication, which would otherwise be needed for the acquisition of setting information and saving the storage area for setting information.

According to a fourth aspect of the invention, the priority in storing setting information ensuing from a user replacement is determined according to the number of times each user has used the information terminal device, the number being held in the user list to be referenced by the user list storage unit, storing of such units of setting information which would wastefully secure a greater storage area than a certain size, out of the units of setting information of less frequent users to be stored, is avoided. This results in an advantage of saving the storage area for terminal setting information.

As described above, according to the present invention, resetting of setting information, which would be required for each user when one user is replaced by another, can be realized by replacing, if the replacing user has experience of using the information terminal device if only once, the setting stored in the terminal. As a result, acquisition of all the units of setting information by remote communication from a terminal management server is not needed. This makes it possible to reduce or even eliminate communication which would otherwise be needed for the resetting of terminal setting information, and moreover to shorten the length of time taken until the completion of resetting.

This makes it possible to reduce or even eliminate the quantity of communication burden on the user, which would otherwise be needed for the resetting of terminal setting information, and to shorten the length of time taken until the completion of resetting user information compared with the prior art.

Further according to the invention, by providing a mobile terminal having inside the information terminal device according to the first aspect of the invention with a flag management function for setting information shared among users, duplicated storing of setting information to be shared by users, such as user-independent setting information including hardware information or a definition file for anti-virus software, can be avoided, and savings in storage area for setting information and its more efficient management can be thereby realized.

Further according to the invention, where setting information is to be shared using a common management number according to the second aspect of the invention in a mobile terminal having inside the information terminal device according to the first aspect of the invention, users in the same group are enabled to share setting information in the group by providing a mechanism to group user information on a plurality of users on the information terminal device. This makes possible acquisition of setting information whose sharing is sought by users by remote communication and sharing by a group of setting information which otherwise would be closed upon every input by a user at the information terminal device or for every unit of user information, thereby realizing reduction or even elimination of communication needed for acquisition and savings in storage area for setting information.

Further according to the invention, in a mobile terminal mounted with the terminal setting information management device embodying the invention, when an alteration in user information necessitates storing of setting information, user IDs which are likely to be less frequently used are predicted from records of the user list, which has as its stored information the number of times the terminal has been used, whether or not to store setting information needing a greater storing area than is set at the terminal is determined, and thereby storing is prioritized. This makes it possible to avoid storing of setting information which would wastefully secure a large storage area, out of setting information of users whose frequency of use is lower, and to save the storage area for setting information in the terminal.

The above-stated objects and advantages of the present invention will become more apparent from the following description of the preferred embodiments of the invention when taken in conjunction with the accompanying drawings.

### BRIEF DESCRIPTION OF THE DRAWINGS

Fig. 1 is a block diagram of resetting in an information terminal device for terminal setting information matching a replacing user in a first preferred embodiment of the present invention;
Fig. 2 is a flowchart of resetting in the information terminal device for terminal setting information matching the replacing user in the first preferred embodiment of invention;
Fig. 3 is a block diagram of the user management unit at the time of altering user information by changing the external storage medium in the first preferred embodiment of invention;
Fig. 4 is a flowchart of the operation of the user management unit at the time of altering user information by changing the external storage medium in the first preferred embodiment of invention;
Fig. 5 is a flowchart of internal acquisition of terminal setting information by an existing user in the first preferred embodiment of invention;
Fig. 6 is a flowchart of remote acquisition of terminal setting information by a new user in the first preferred embodiment of invention;
Fig. 7 illustrates an example of information elements stored in the user list in the first preferred embodiment of invention;
Fig. 8 is a flowchart of a sequence until the completion of embedded storage of user ID in current setting information in the first preferred embodiment of invention;
Fig. 9 is a flowchart of a sequence until the completion of deletion of less frequently used setting information in the first preferred embodiment of invention;
Fig. 10 illustrates an example of expansion of stored information in the user list in a second preferred embodiment of invention;
Fig. 11 is a flowchart of acquisition of an individual management number and a common management number into the user list storage list in the second preferred embodiment of invention;
Fig. 12 illustrates an example of expansion of stored information in the user list in a third preferred embodiment of invention;
Fig. 13 illustrates an example of information stored in the user list in the third preferred embodiment of invention;
Fig. 14 is a flowchart of acquisition of an individual management number and a group common management number into the user list storage unit in the third preferred embodiment of invention; and
Fig. 15 is a flowchart of a sequence until the completion of storage of current setting information prioritized according to the frequency of use by an information terminal device in a fourth preferred embodiment of invention.

### DESCRIPTION OF THE PREFERRED EMBODIMENTS

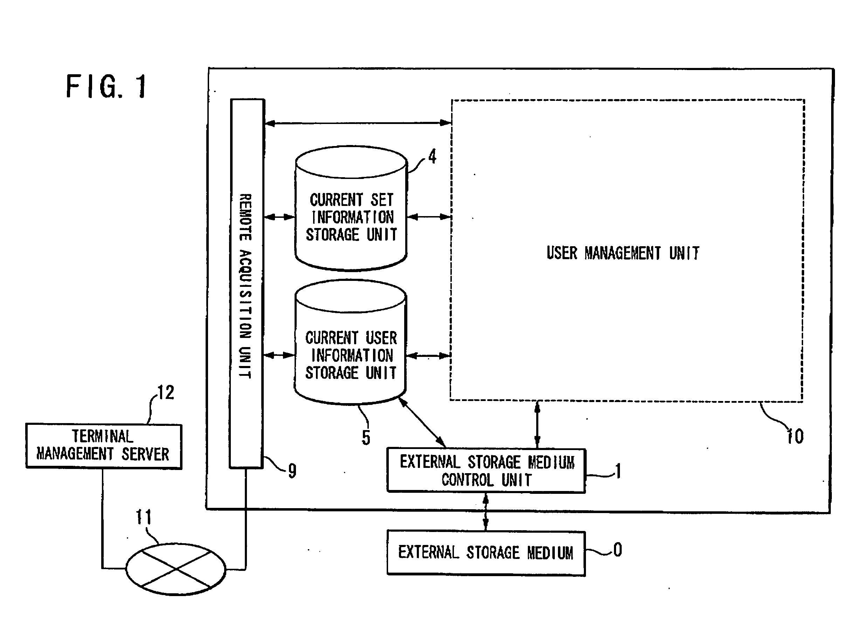

Preferred embodiments of the present invention will be described below with reference to Fig. 1 through Fig. 9.

### (Embodiment 1)

In a mobile terminal which embodies the invention in this mode, which is a network-connectable information terminal device, when a plurality of users are to share the information terminal device, in order to set in the terminal setting information matching a replacing user, it is decided from a user list at the time this user replaces the preceding terminal user whether or not the new user has experience of using the terminal, and setting information is replaced with what matches the replacing user picked out of stored setting information.

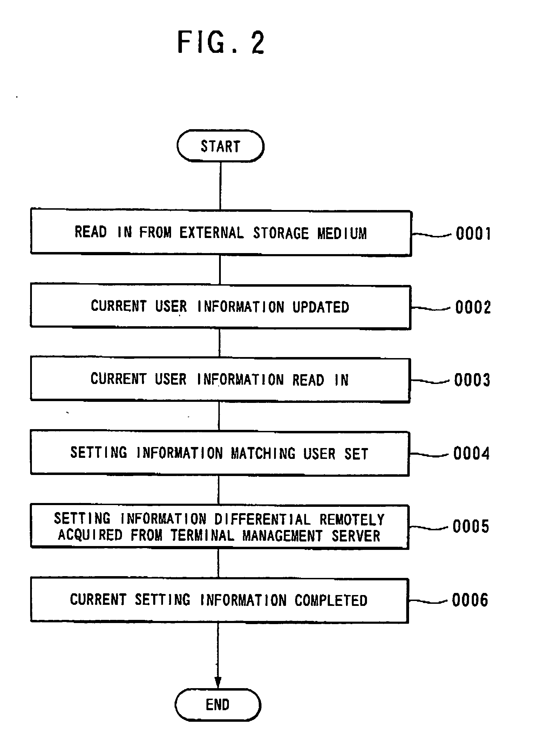

First will be described the flow of overall processing by this device with reference to Fig. 1 and Fig. 2.

Fig. 1 is an overall functional block diagram of a terminal having this device within.

As shown in Fig. 1, an external storage medium 0 in this device stores user information distributed by the carrier to users. An external storage medium control unit 1 is a control device for reading in user information stored in the external storage medium 0. A current user information storage unit 5 stores user information on a replacing terminal user read into the external storage medium control unit 1. A user management unit 10, the core of the present invention, detects any updating of user information in the current user information storage unit 5 and processes resetting of terminal setting information to match it to the replacing user. Details of its internal features will be described afterwards. A current setting information storage unit 4 stores setting information of the replacing terminal user at the instruction of the user management unit 10. A network 11 is a communication path including a base station radio network provided by the carrier and the Internet public network to which the base station network is connected by a gateway. A terminal management server 12 stores user-by-user terminal management setting information on the terminal, and issues commands for addition to, alteration of or deletion from setting information from a remote position to the terminal via the network 11. A remote acquisition unit 9 is an in-terminal module which, at the instruction of the user management unit 10, transmits to the terminal management server 12 requests for setting information and receives terminal management commands. Now will be explained the processing in the terminal described above to set terminal setting information to match the replacing terminal user in the following flow.

As shown in Fig. 2, the user management unit 10 completes setting of terminal setting information to match the replacing user in the following sequence from the mounting of the external storage medium 0 onto the terminal.

### <Step 0001>

The external storage medium control unit 1 reads in user information from the external storage medium 0.

### <Step 0002>

The external storage medium control unit 1 writes into the current user information storage unit 5 the user information acquired from the external storage medium 0 to update the stored information in the storage unit 5.

### <Step 0003>

The user management unit 10, in response to the updating of the current user information storage unit 5, reads in the replacing user information from the current user information storage unit 5.

### <Step 0004>

The user management unit 10 internally examines the experience of using the information terminal device on the basis of part of the user information and, if there is setting information stored regarding the replacing user, stores that terminal setting information into the current setting information storage unit 4.

### <Step 0005>

If no setting information matching the replacing user is found at Step 0004 to be stored, and if the replacing user has no experience of internally using the information terminal device, i.e. there is no such setting information stored or that user has only insufficient experience, if any, of using the setting information, the user management unit 10 transmits to the remote acquisition unit 9 a request for remote acquisition of the difference of that setting information for the terminal management server 12.

### <Step 0006>

The remote acquisition unit 9 establishes connection for remote communication to the terminal management server 12 via the network 11, acquires the whole differential terminal setting information, and stores it into the current setting information storage unit 4.

The processing to examine the experience of the information terminal device and the processing after the replacement of setting information, both described above, are instructed by a module present in the user management unit 10. Details of the instructing procedure will be described afterwards.

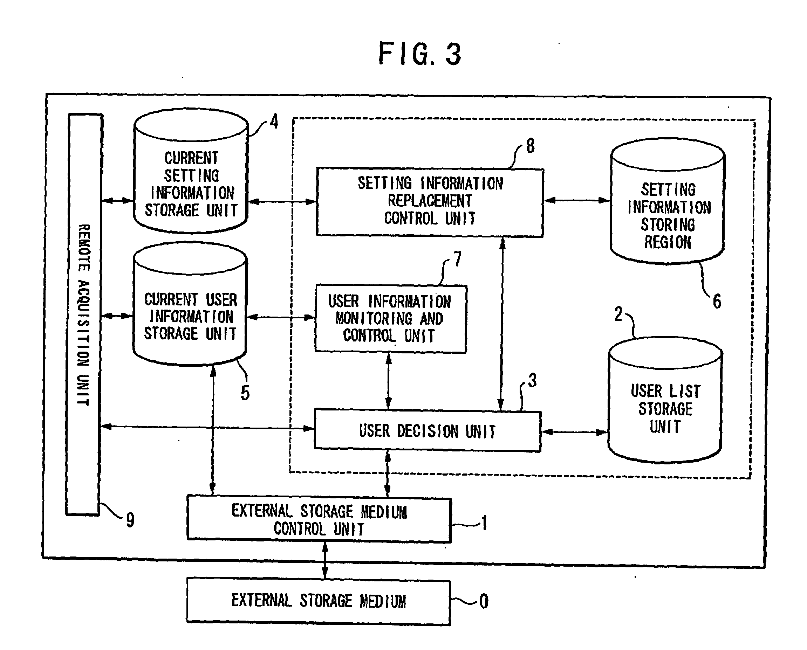

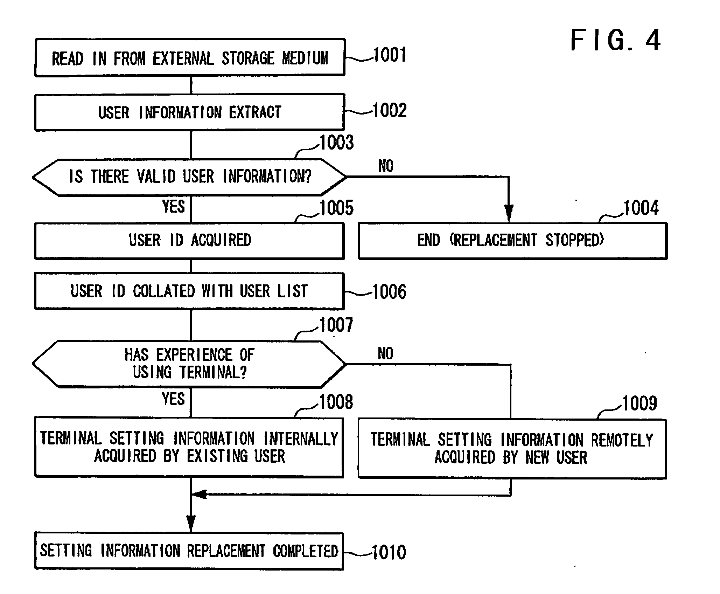

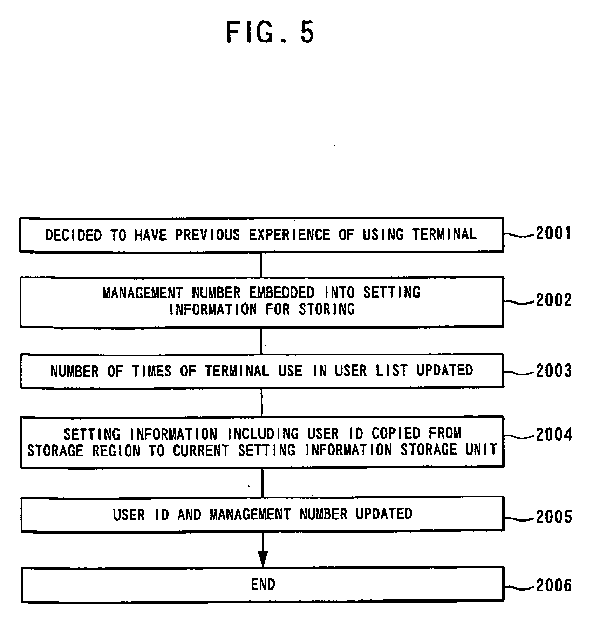

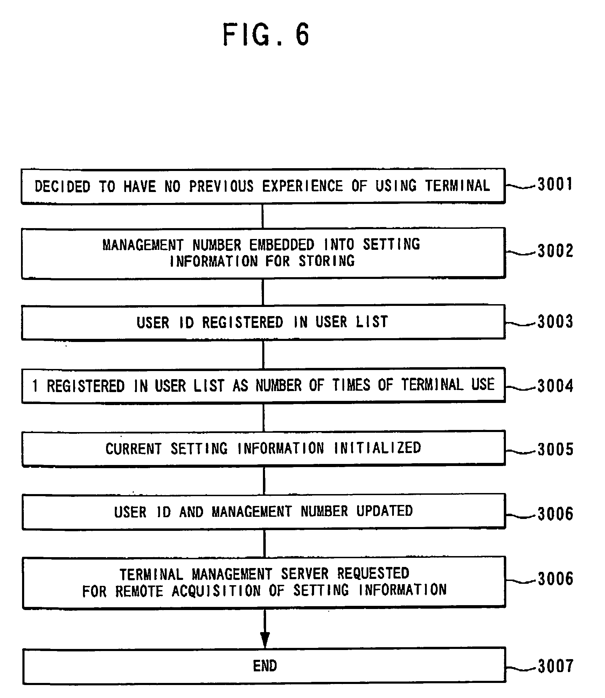

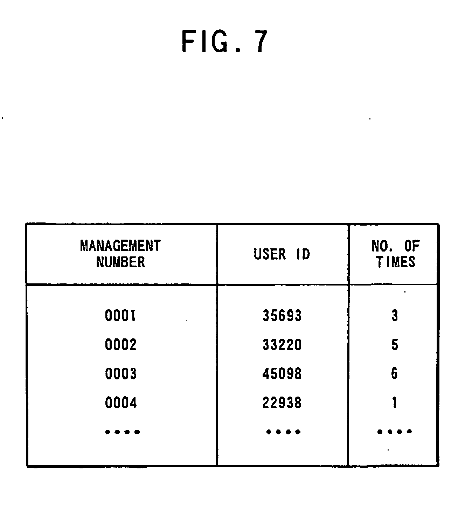

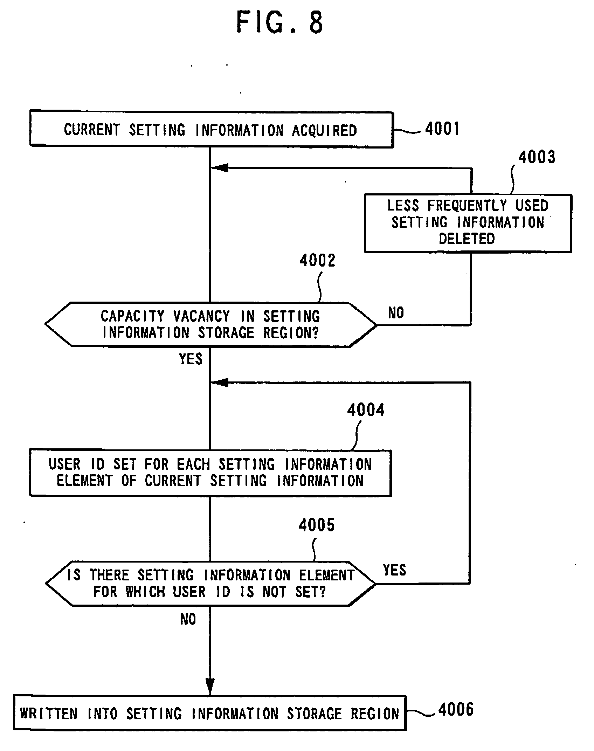

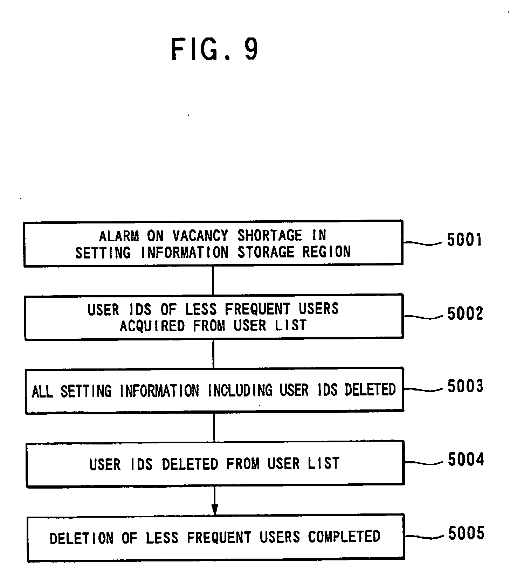

Next will be described internal processing in the user management unit 10 shown in Fig. 1 with reference to Fig. 3 through Fig. 9. Fig. 3 shows functional blocks the user management unit 10 is provided with inside. Fig. 4 is a flowchart of the sequence in which it is decided whether or not the replacing user has experience of using the terminal from user information after the user replacement, and terminal setting information is replaced within the terminal if it is decided that the replacing user has experience of using the terminal, or acquisition of terminal setting information by remote communication to outside the terminal if the replacing user is decided to have no experience of using the terminal. Fig. 5 is a flowchart of the sequence of replacing setting information of the user decided to have experience of using the terminal. Fig. 6 is a flowchart of the sequence of registering in the list the user decided to have no experience of using the terminal and replacing the setting information. Fig. 7 shows the configuration of the user list held inside. Fig. 8 is a flowchart of the sequence of storing setting information in the processing to replace the setting information. Fig. 9 is a flowchart of the sequence of processing to secure vacancies in the area for storing terminal setting information.

As shown in Fig. 3, in this embodiment of the invention, the external storage medium 0 is a storage medium for storing user information distributed by the carrier to users. The external storage medium control unit 1 is an in-terminal control module for reading in user information from the external storage medium 0 and storing it into the current user information storage unit 5. The user list storage unit 2 stores inside a list of users having experience of using the information terminal device. A user decision unit 3, informed by the current user information storage unit 5 of an alteration in user information, instructs a setting information replacement control unit 8 to replace terminal setting information matching the replacing user. The current setting information storage unit 4 has an area in which to store setting information matching the replacing user according to the result of processing by the setting information replacement control unit 8. The current user information storage unit 5 has an area inside in which to store user information on the replacing user it has received from the external storage medium control unit 1. A setting information storing region 6 has a plurality of areas in which user setting information to be stored, obtained as a result or processing by the setting information replacement control unit 8, can be stored. A user information monitoring and control unit 7 monitors user information in the current user information storage unit 5, and informs the user decision unit 3 of any change in that user information. The setting information replacement control unit 8, at the instruction of the user decision unit 3, stores setting information in the current setting information storage unit 4 into the setting information storing region 6, or selects setting information matching the user information out of the setting information storing region 6 and replaces it into the current setting information storage unit 4, or sets new setting information of a new user into the current setting information storage unit 4; the remote acquisition unit 9, at the instruction of the user decision unit 3, processes connection to the terminal management server 12 shown in Fig. 1. The user management unit 10 shown in Fig. 1 is configured of the user list storage unit 2, the user decision unit 3, the setting information storing region 6, the user information monitoring and control unit 7 and the setting information replacement control unit 8 so far described. Regarding the terminal setting information management device configured as described above, the flow of internal processing in this device will be described below in which the user is determined from the detection of the user after user replacement and terminal setting information is set within the terminal.

As shown in Fig. 4, the user decision unit 3 sets terminal setting information matching the user within the terminal in the flow described below on the basis of user information read out of the current user information storage unit 5.

### <Step 1001>

The external storage medium control unit 1 reads in user information recorded on the external storage medium 0, and stores it into the current user information storage unit 5 as replacing user information.

### <Step 1002>

The user information monitoring and control unit 7 detects the updating of the current user information storage unit 5, and extracts user information.

### <Step 1003>

The user information monitoring and control unit 7 checks whether or not the user information extracted from the current user information storage unit 5 contains effective information for making user decision in the terminal. If no such information is contained, processing of step 1004 is done.

### <Step 1004>

The user information monitoring and control unit 7, if it finds no effective information for making user decision in the terminal contained in the user information extracted from the current user information storage unit 5, stops the processing of replacing terminal setting information to match the user information.

### <Step 1005>

The user information monitoring and control unit 7, if it finds any valid information for making user decision in the terminal contained in the user information extracted from the current user information storage unit 5, hands over the user information to the user decision unit 3, and the user decision unit 3 acquires as user ID a specific item of information in the user information, such as an external storage medium registration number, for use in management on the terminal.

### <Step 1006>

The user decision unit 3, in order to check according to the user ID acquired from the user information monitoring and control unit 7 whether or not the replacing user has experience of using the information terminal device, issues a request for search, accompanied with the user ID, to the user list storage unit 2.

### <Step 1007>

The user list storage unit 2 compares the user ID received from the user decision unit 3 with the IDs of users having experience of using the terminal registered in the user list internally held by the user list storage unit 2, and checks the experience of the replacing user of using the information terminal device, i.e. the presence or absence of stored setting information matching the replacing user.

### <Step 1008>

The user decision unit 3, if it finds as a result of referencing the user list storage unit 2 that the replacing user has experience of using the information terminal device, instructs the setting information replacement control unit 8 to process internal acquisition of terminal setting information of an existing user to be described afterwards.

### <Step 1009>

The user decision unit 3, if it finds as a result of referencing the user list storage unit 2 that the replacing user has no experience of using the information terminal device, instructs the user list storage unit 2 and the setting information replacement control unit 8 to process remote acquisition of terminal setting information by a new user to be described afterwards.

### <Step 1010>

The user management unit 10 completes setting of terminal setting information by going through the internal acquisition of terminal setting information at Step 1008 or the remote acquisition at Step 1009.

Next will be described in detail the sequence of processing in which setting information matching users having experience of using the information terminal device as referred to in Fig. 4 is acquired from the setting information storing area in which the information is stored within the terminal and is made usable.

As shown in Fig. 5, the setting information replacement control unit 8 sets terminal setting information in the flow described below.

### <Step 2001>

The user decision unit 3 receives from the user list storage unit 2 a notification that the replacing user has experience of using the information terminal device.

### <Step 2002>

The user decision unit 3, in order to store setting information of the replaced user which is present in the current setting information storage unit 4 so that the user may remain identifiable, gives an instruction to embed a management number matching the replaced user ID as part of the setting information and to store it in the setting information storing region 6.

### <Step 2003>

The setting information replacement control unit 8 notifies the user decision unit 3 of completion of storing the information in the setting information storing region 6, and the user decision unit 3 issues to the user list storage unit 2 an instruction to update the number of times the terminal has been used by the replaced user.

### <Step 2004>

The user decision unit 3 notifies the setting information replacement control unit 8 of a management number, stored in the current user information storage unit 5, matching the ID of the user, and the setting information replacement control unit 8 identifies from the setting information storing region 6 the setting information matching the user on the basis of the management number and copies it to replace the pertinent content in the current setting information storage unit 4.

### <Step 2005>

At the instruction of the user decision unit 3, the user ID and the management number held inside the setting information replacement control unit 8 are updated.

### <Step 2006>

Internal acquisition of terminal setting information by the existing user is completed.

Next will be described in detail the sequence of processing in which setting information matching a user having no experience of using the information terminal device as referred to in Fig. 4 is acquired by remote communication from a remote terminal management server outside the terminal and is made usable.

As shown in Fig. 6, the user decision unit 3 and the setting information replacement control unit 8 set terminal setting information in the following sequence.

### <Step 3001>

The user decision unit 3 receives from the user list storage unit 2 a notification indicating the absence of experience of using the information terminal device.

### <Step 3002>

The user decision unit 3, in order to store setting information of the replaced user which is present in the current setting information storage unit 4 so that the user may remain identifiable, gives an instruction to embed a management number matching the replaced user ID as part of the setting information and to store it in the setting information storing region 6.

### <Step 3003>

The user decision unit 3, in order to register in the user list the user ID of user information, present in the current user information storage unit 5, as the ID of a new user, issues to the user list storage unit 2 a request, accompanied with the user ID, for its registration.

### <Step 3004>

The user list storage unit 2, records the number of times the terminal has been used by the user ID as one in the internally held user list and notifies the user decision unit 3 of the completion of registration.

### <Step 3005>

The user decision unit 3 instructs the setting information replacement control unit 8 to initialize the current setting information storage unit 4 to prepare for newly setting terminal setting information for user information present in the current user information storage unit 5.

### <Step 3006>

The setting information replacement control unit 8, at the instruction of the user decision unit 3, updates the user ID and the management number it internally holds.

### <Step 3007>

The user decision unit 3, in order to acquire a differential of terminal setting information setting, requests the remote acquisition unit 9 for remote acquisition of terminal setting information based on the replacing user.

### <Step 3008>

The remote acquisition unit 9 prepares a message of requesting acquisition of terminal setting information on the basis of user information present in the current user information storage unit 5, and connects to the terminal management server 12 via the network 11. The terminal management server 12 receives the message of requesting acquisition of setting information from the information terminal device present in a remote place, and transmits the terminal setting information differential to the information terminal device as a message. The remote acquisition unit 9 receives it, and adds terminal setting information to or updates terminal setting information in the current setting information storage unit 4. All setting information of the replacing user is stored into the current setting information storage unit 4, and the setting information replacement control unit 8 notifies the user decision unit 3 of the completion of remote acquisition to complete the processing of replacement.

Next will be described the method of storing the management number and the user list prepared for the user-by-user identification of terminal setting information stored within the terminal in the processing of storing setting information charted in Fig. 5 and Fig. 6.

As shown in Fig. 7, the user list storage unit 2 stores the user list having the following elements to realize user-by-user identification and management of setting information.

In Embodiment 1, for user identification and terminal setting information management on the information terminal device, a management number which is valid only on the terminal is distributed to each user, and user IDs and the number of times the terminal has been used by each user are stored as information elements. The user ID shown here presupposes the use of information not allowing duplication, such as the external storage medium registration number. The information not allowing duplication is not limited to the external storage medium number and also includes any kind of intrinsic user information which allows no duplication to ensure unequivocal user identification such as the user's name and the carrier-issued telephone number.

Next will be described the processing to store setting information by use of the user ID and the management number in the processing of storing setting information charted in Fig. 5 and Fig. 6.

As shown in Fig. 8, the setting information replacement control unit 8 stores the setting information to be stored into the setting information storing region 6 in the follow described below.

### <Step 4001>

The user decision unit 3, when setting information matching the current user is to be set by updating the user information stored in the current user information storage unit 5, issues to the setting information replacement control unit 8 an instruction to store the setting information of the replaced user into the setting information storing region 6, and the setting information replacement control unit 8 acquires current setting information from the current setting information storage unit 4.

### <Step 4002>

The setting information replacement control unit 8 checks the vacancy in the storing capacity of the setting information storing region 6.

### <Step 4003>

The setting information replacement control unit 8, if no sufficient storing area can be secured in the setting information storing region 6, instructs the setting information storing region 6 to perform processing, as will be described afterwards, to secure a vacancy in capacity by deleting less frequently used setting information. If a sufficient storing area can be secured in the setting information storing region 6, the processing of Step 4004 described below is carried out.

### <Step 4004>

The setting information replacement control unit 8, if a sufficient storing area can be secured in the setting information storing region 6, enters into each setting information element of the terminal setting information acquired from the current setting information storage unit 4 a management number matching the user ID held by the setting information replacement control unit 8 as additional information.

### <Step 4005>

The setting information replacement control unit 8 confirms that a management number matching a user ID has been added to every constituent element of setting information acquired from the current setting information storage unit 4. <Step 4006>

The setting information replacement control unit 8, upon completion of the additional entry into every element of setting information acquired from the current setting information storage unit 4, writes into the setting information storing region 6 to complete storing of the setting information in the current setting information storage unit 4.

Next will be described the processing to secure a vacancy in capacity by deleting less frequently used setting information if no sufficient storing area can be secured in the setting information storing region in the processing to replace setting information within the terminal as charted in Fig. 8.

As shown in Fig. 9, the setting information replacement control unit 8, the user decision unit 3 and the setting information storing region 6 execute deletion of less frequently used setting information in the following sequence.

### <Step 5001>

The setting information replacement control unit 8, if it receives an alarm notice of insufficient vacancy in the capacity of the setting information storing region 6 in the processing to store setting information of the replaced user, inquires of the user decision unit 3 as to any user ID to be deleted.

### <Step 5002>

The user decision unit 3, in response to the inquiry from the setting information replacement control unit 8, requests the user list storage unit 2 for acquisition of less frequently used user IDS and management numbers, and returns the result to the setting information replacement control unit 8.

### <Step 5003>

The setting information replacement control unit 8 holds the user IDs and management numbers received from the user decision unit 3, deletes all setting information including the management numbers from the setting information storing region 6, and notifies the user decision unit 3 of the completion.

### <Step 5004>

The user decision unit 3 deletes from the user list held by the user list storage unit 2 the user IDs and management numbers to be deleted.

### <Step 5005>

The setting information replacement control unit 8, by receiving from the user decision unit 3 a notification of the completion of deletion, completes securing of a vacancy in the capacity of the setting information storing region 6.

The terminal setting information reset either by internal acquisition or remote acquisition permits access by a plurality of applications needing it on the terminal, such as a browser.

Continual access to current setting information or current user information from the terminal management server 12 present on the network is also allowed as in remote acquisition of terminal setting information.

It is not absolutely necessary for user information to be recorded on the external storage medium in this embodiment to be recorded on the external storage medium. A device permitting resetting of terminal setting information on a user-by- user basis is considered a terminal setting information management device according to the invention even if user information perceivable by the external storage medium Control unit, such as a plurality of items of user information, is held in a memory storing region on a terminal and can be selected on the display screen of the terminal or the like, or user information is selectable by short range communication means, such as infrared ray communication or Bluetooth or some other short range radio communication, or from a non-contact recording medium.

Further, although the number of times the terminal has been used by each user is recorded in the user list and setting information is deleted in the ascending order of the pertinent user's frequency of use in Embodiment 1 in order to secure a vacancy in the capacity of the setting information storing region 6, this deletion according to the relative frequency of use is only an example, and any other appropriate criterion can also be used, such as a first-in first-out basis according to the recorded day and hours of information updating or the ascending order of predetermined relative importance of storing.

As described above, this embodiment of the invention makes it possible to realize resetting of setting information required for each user when the user of an information terminal device is replaced by another person for any user having experience of using the device if only once by replacing terminal setting information stored within the terminal, users having experience of using the terminal if only once being listed in a user list and setting information, which would otherwise be initialized after a user replacement being held in another region even after the user replacement than the setting information region for the replacing terminal user. As a result, no full acquisition of setting information by remote communication from the terminal management server is required, and acquisition of only the minimal differential suffices. In other words, remote communication required for the resetting of terminal setting information can be dispensed with or at least reduced, and moreover the length of time taken to complete resetting is made shorter than according to the prior art, resulting in a significant practical advantage.

### (Embodiment 2)

This embodiment of the invention has a mechanism of avoiding duplication of stored information by distributing a common management number for terminal setting information to be commonly used by terminal users in a mobile terminal mounted with the terminal setting information management device described above as Embodiment 1, and thereby realizes more efficient setting information management enabling the storage area to be saved. The mechanism will be described below.

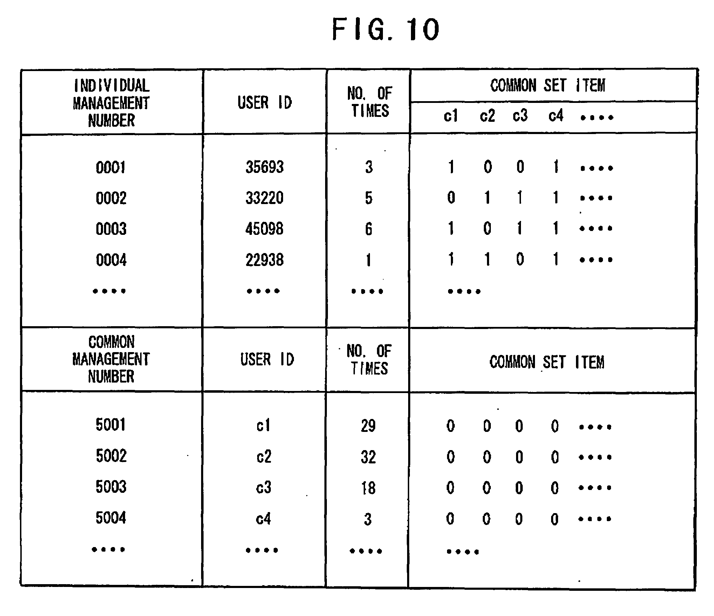

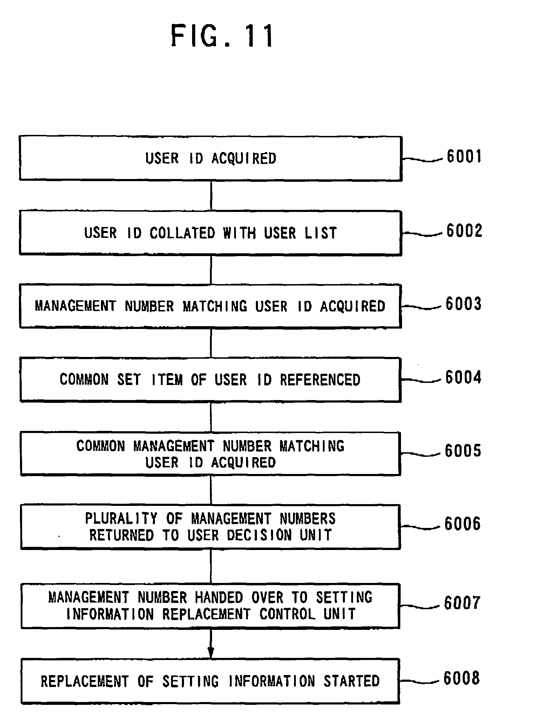

Processing of common setting of terminal setting information will be described with reference to Fig. 10 and Fig. 11.

As shown in Fig. 10, setting information for common use by terminal users is shared by extending the information stored in the user list held by the user list storage unit 2 and assigning flag information for commonly set items.

This is intended to achieve efficient management by introducing the concept of common set items regarding the setting information to be stored within the terminal. A common set item is added to the three items shown in Fig. 6, including the management number, user ID and the number of times of use, and the management number is classified into the individual management number and the common management number. The common set item here refers to an item of setting information which, out of the items of setting information that can be commonly set by the users, is fixed and need not be altered or is to be commonly updated. At the terminal, the IDs for distinction of that common set item are replaced by user IDs expressed as c1, c2 and so forth, and managed as such.

The individual management numbers are serial four-digit numbers beginning with 0001, and the common management numbers, serial four-digit numbers beginning with 5001. The user IDs matching the individual management numbers are unchanged from the previous practice and, for the user IDs matching the common management numbers, the common set item, namely the user IDs meaning the common set item. The number of times of use is also unchanged from the previous practice, but the common management numbers of 5000s, which match the common set item, are not subject to prioritized deletion for securing a memory vacancy in the setting information storing region 6 shown in Fig. 2. For the common set item, user IDs are allocated in an ascending order from c1 to be in one-to-one correspondence to each element. Each user ID holds with a one-bit flag the presence or absence of shared common setting information with respect to that common set item. If the bit is valid (for instance, "1" means the presence of common setting information, "0" means the absence), the common management number is internally inquired of relying on a user ID, such as c1 corresponding to the common set item. Although it is conceivable that the common set item may further have a common set item, namely shared information may further have shared setting information, this embodiment supposes every such case to be invalid, namely only level of shared setting information is acquired.

Next will be described the processing to acquire an individual management number and a common management number matching the replacing user in the user list storage unit 2 and the user decision unit 3 as charted in Fig. 11.

To be in more detail, the processing begins with acquisition of user information by the user decision unit 3 from the external storage medium 0 via the external storage medium control unit 1 and inquiring of the user list storage unit 2 about the presence or absence of the user's experience of using the information terminal device on the basis of a defined user ID and ends with resetting of terminal setting information, i.e. instructing the setting information replacement control unit 8 to replace setting information matching the user stored in the setting information storing region 6. The difference between this Embodiment 2 and Embodiment 1 consists in that, regarding the user ID to be referenced, the common management number concerning the setting information which is shared as a common set item is also returned to the user decision unit.

### <Step 6001>

The user decision unit 3 acquires a user ID from user information via the user information monitoring and control unit 7 at the time of updating information in the current user information storage unit 5 of or selecting a user on the terminal.

### <Step 6002>

The user decision unit 3 acquires a user ID from the user information monitoring and control unit 7, and makes an inquiry, accompanied with the user ID, with the user list storage unit 2 as to whether or not the replacing user has experience of using the information terminal device.

### <Step 6003>

The user list storage unit 2 collates the user ID with the user list it has within and, if the user has experience of using the information terminal device, acquires an individual management number, which is valid only within the terminal, matching the user ID.

### <Step 6004>

The user list storage unit 2 references a flag falling under the common set item extended in this embodiment to the user list.

### <Step 6005>

The user list storage unit 2 internally acquires a common management number on the basis of the user ID, such as c1, allocated for the common set item for every common set item for which the flag is valid.

### <Step 6006>

The user list storage unit 2, after acquiring all the common management numbers matching the individual management numbers and user IDs included in the request from the user decision unit 3, returns the pertinent plurality of management numbers to the user decision unit 3.

### <Step 6007>

The user decision unit 3 receives the plurality of management numbers, and hands over all the management numbers to the setting information replacement control unit 8.

### <Step 6008>

The setting information replacement control unit 8 acquires from the setting information storing region 6 setting information pertinent to the received management number, and starts processing replacement into the current setting information storage unit 4.

By the processing to acquire individual management numbers and common management numbers described above, the setting information replacement control unit 8 secures a vacancy in the capacity of the setting information storing region 6, and can thereby continue to store terminal setting information of previous users, which is to be stored.

As described so far, this embodiment can avoid duplicated storing of setting information to be shared by users, such as user-independent setting information including hardware information or a definition file for anti-virus software, by providing the user list referenced by the user list storage unit with a flag management function for the setting information shared by the users, and thereby realize savings in storage area for setting information and its more efficient management. Accordingly, the resultant practical advantage is significant.

### (Embodiment 3)

This embodiment of the invention to be described below is a terminal setting information management device, where setting information is to be shared according to a common management number as in Embodiment 2 in a mobile terminal mounted with a terminal setting information management device, which is Embodiment 1 of the invention, different users in the same group are enabled to share a specific item of setting information by grouping a plurality of items of user information.

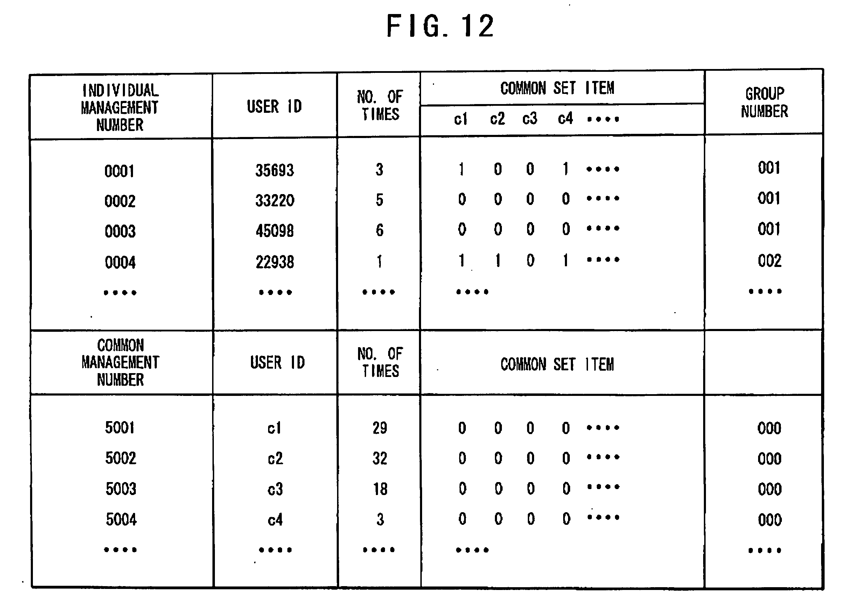

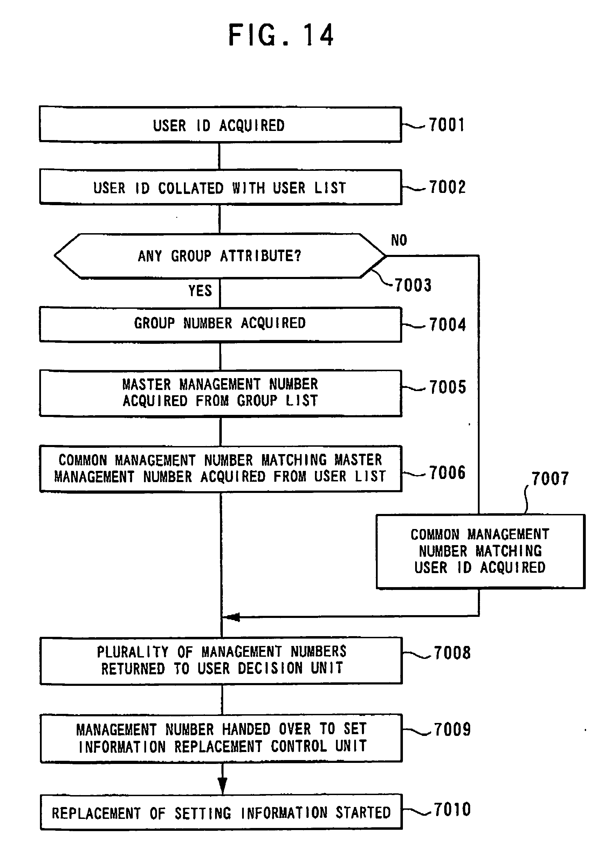

Processing for common setting of setting information by grouping users in a user list will be described with reference to Fig. 12 and Fig. 14.

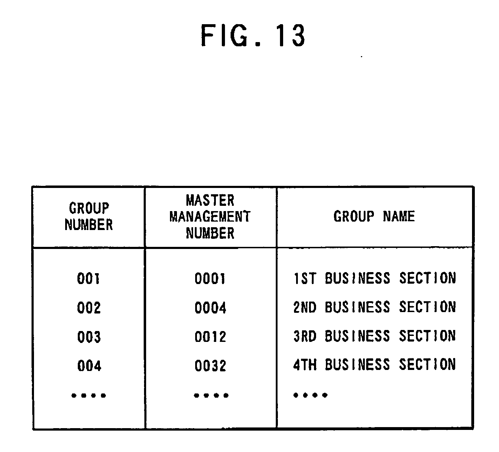

As shown in Fig. 12, information regarding group attributes is added to the information stored in the user list held by the user list storage unit 2. Further as shown in Fig. 13, a group list in which to store the names of managers and group attributes to which group-shared information refers is newly established in the user list storage unit 2. Means of realizing the processing to set terminal setting information to be commonly used by users belonging to the same group within the group within the terminal shared according to a common management number, made possible by these additions of group attributes and of the group list, will be described below.

As shown in Fig. 12, information on the group numbers to which users belong is stored in the user list management by Embodiments 1 and 2 according to the invention, and a group number beginning with 001 is assigned to each individual management number. A given individual management number is supposed to have one group attribute, and a group number 000 is assigned to a user belonging to no group. The relationship between the group numbers and individual management numbers is a relationship of one to multiple, and the group list shown in Fig. 13 is held within the user list storage unit 2 as a separate one from the user list. The group list manages a plurality of groups from the group number 001 onwards, and has management numbers (master management numbers) and group names representing group attributes, by which setting information shared by the groups is to be referred to. The group numbers and the master management numbers are in a one-to-one relationship.

In Fig. 12, while individual management numbers 0001 and 0004 which constitute the master management numbers of the group hold the common set item as a flag matching the common management number, for 0002 and 0003 which do not constitute the master management numbers of the group, every flag under the common set item is supposed to be 0 in order to avoid contention with setting information shared by the group. Further, group numbers matching common management numbers 5001 onwards, which are to constitute a common set item, are supposed to be 000 in order to avoid group succession.

Next, as shown in Fig. 14, the user decision unit 3, using the user list storage unit 2, identifies the group to which a given user belongs from the replacing user ID, acquires the individual management number for setting information matching the replacing user and the common management number of setting information shared by the group, and issues an instruction to the setting information replacement control unit 8 to replace the setting information.

The difference between this Embodiment and Embodiments 1 and 2 consists in that, regarding the user ID by which, the user decision unit 3 is to reference the user list storage unit 2, the common management number concerning the setting information which is shared as a common set item described with reference to Embodiment 2 is returned to the user decision unit 3 as the master management number matching the group attribute of the user. The processing of these steps is realized in the following sequence.

### <Step 7001>

The user decision unit 3, at the time of updating the current user information storage unit 5 or selecting a user on the terminal, acquires a user ID from user information via the user information monitoring and control unit 7.

### <Step 7002>

The user list storage unit 2 collates the user ID received from the user decision unit 3 with the user list it has within and, if the user has experience of using the information terminal device, acquires an individual management number matching the user ID.

### <Step 7003>

The user list storage unit 2 checks the presence of absence of the group attribute extended in this embodiment in the user list. If no group attribute is found, processing of Step 7007 stated below is carried out.

### <Step 7004>

The user list storage unit 2 internally acquires from the user list a group number matching the user ID.

### <Step 7005>

The user list storage unit 2 references the group list by the group number acquired from the user list, and acquires the master management number of the matching group.

### <Step 7006>

The user list storage unit 2, using as the individual management number the master management number acquired from the group list, acquires the common management number of the common set item matching the user list.

### <Step 7007>

If at Step 7003 no group attribute matching the user ID is found, i.e. if the group number is 000, the user list storage unit 2 internally acquires an individual management number and a common management number matching the user as described with reference to Embodiment 2 of the invention.

### <Step 7008>

The user list storage unit 2 returns to the user decision unit 3 the individual management number and the plurality of common management numbers matching the requested user ID.

### <Step 7009>

The user decision unit 3 hands over the received plurality of management numbers to the setting information replacement control unit 8.

### <Step 7010>

The setting information replacement control unit 8 acquires from the setting information storing region 6 setting information matching the received management number, and starts processing replacement into the current setting information storage unit 4.

As described above, the processing by the user list storage unit 2 to acquire an individual management number matching the user on the basis of the user ID and a common management number matching the group to which the user belongs enables the setting information replacement control unit 8 to process replacement of the matching setting information.

As described so far, this embodiment enables users in the same group to share setting information in the group with its mechanism to group a plurality of units of user information on the terminal for setting information of another person which users desire to share. This makes possible acquisition of setting information whose sharing is sought by users by remote communication and sharing by a group of setting information which otherwise would be closed upon every input by a user at the terminal or for every unit of user information, thereby realizing elimination or at least reduction of communication needed for acquisition and savings in storage area for setting information. Accordingly, the resultant practical advantage is significant.

### (Embodiment 4)

This embodiment of the invention to be described below is a terminal setting information management device, where setting information is to be distinguished according to a common management number as in Embodiment 2 in a mobile terminal mounted with a terminal setting information management device, which is Embodiment 1 of the invention, units of setting information which are likely to be less frequently used are predicted from records of the user list in the terminal, whether or not to store setting information needing a greater storing area than is set at the terminal is determined, and thereby storing is prioritized.

The device configuration of this embodiment is supposed to be the same as that of Embodiment 1, though the following step of processing is added after the processing to delete setting information in order to secure a vacancy in the capacity of the setting information storing region 6 in the processing to store current setting information to be executed in response to an alteration of current user information. Having received an instruction to store current setting information, the setting information replacement control unit 8 inquires with the user list storage unit 2 via the user decision unit 3 the frequency of use by the user matching the replacing user ID. If the acquired frequency of use by the user is lower than the frequencies of all other users, such units of setting information which would wastefully secure a greater storage area than a certain size, out of the units of setting information to be stored, are given no priority in storing. This arrangement is intended to avoid securing of a storage area for less frequently used setting information and to save the storage area for setting information.

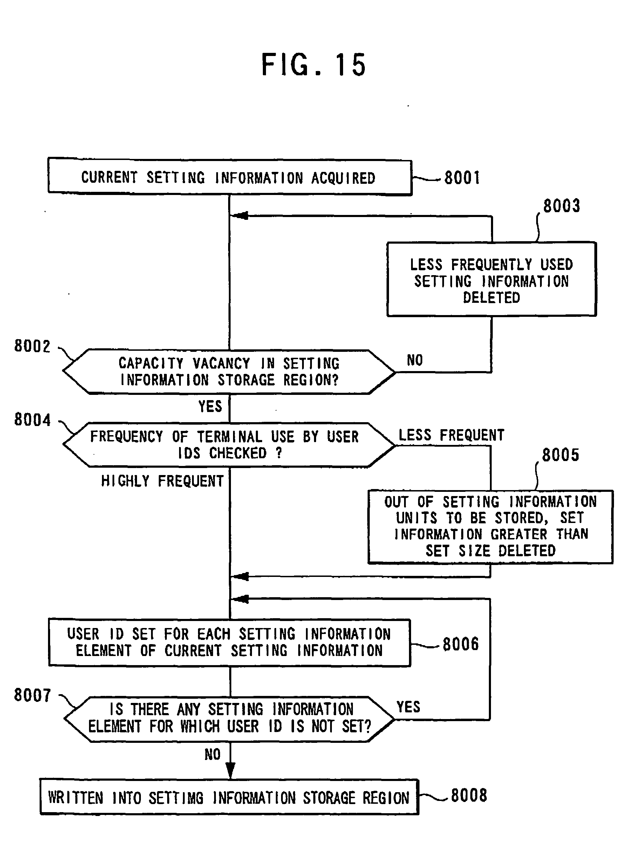

Next, as charted in Fig. 15, the setting information replacement control unit 8, the user decision unit 3, the user list storage unit 2 and the setting information storing region 6 execute in the following sequence prioritized storing of current setting information of users whose frequencies of use are lower.

### <Step 8001>

The setting information replacement control unit 8 acquires current setting information at the instruction of the user decision unit 3 to execute storing of current setting information into the setting information storing region 6.

### <Step 8002>

The setting information replacement control unit 8 checks a vacancy in the capacity of the setting information storing region 6 to store each setting information element of current setting information.

### <Step 8003>

The setting information replacement control unit 8, if it is impossible to secure a sufficient storage area in the setting information storing region 6, secures a vacancy in capacity by deleting less frequently used setting information as described with reference to Embodiment 1.

### <Step 8004>

The user list storage unit 2, if it is possible to secure a sufficient storage area in the setting information storing region 6, checks at the instruction of the setting information replacement control unit 8 the frequency of using the terminal by the user on the basis of the user ID.

### <Step 8005>

The setting information replacement control unit 8, if the acquired frequency of use by the user is lower than the frequencies of all other users, delete such units of setting information which would wastefully secure a greater storage area than a certain size, out of the units of setting information to be stored, from the current setting information.

### <Step 8006>

The setting information replacement control unit 8 states as additional information management numbers matching user IDs into the setting information elements of the current setting information storage unit 4.

### <Step 8007>

The setting information replacement control unit 8 additionally states management numbers matching user IDs into every setting information constituent element of the current setting information storage unit 4.

### <Step 8008>

The setting information replacement control unit 8 completes processing to store current setting information by writing into the setting information storing region 6 upon completion of additional statement into every setting information element.

As described above, the user decision unit 3, the setting information replacement control unit 8 and the user list storage unit 2 decide, in addition to the processing to secure a vacancy in the capacity of the setting information storing region 6 described with reference to Embodiment 1, whether or not to execute storing according to the priority of storing based on the frequency of use of the terminal by each user and the magnitude of setting information, and execute processing to replace current setting information into the setting information storing region.

In this embodiment, as described so far, user IDs which are likely to be less frequently used are predicted from records of the user list, which has as its stored information the number of times the terminal has been used, whether or not to store setting information needing a greater storing area than is set at the terminal is determined, and thereby storing is prioritized. This makes it possible to avoid storing of setting information which would wastefully secure a large storage area, out of setting information of users whose frequency of use is lower, and to save the storage area for setting information in the terminal. Accordingly, the resultant practical advantage is significant.

As hitherto described, according to the present invention, resetting of setting information, which would be required for each user when one user is replaced by another, can be realized by replacing, if the replacing user has experience of using the information terminal device if only once, the setting stored in the terminal. As a result, acquisition of all the units of setting information by remote communication from a terminal management server is not needed. This makes it possible to reduce or even eliminate communication which would otherwise be needed for the resetting of terminal setting information, and moreover to shorten the length of time taken until the completion of resetting.

While the invention has been described with reference to preferred embodiments illustrated in the accompanying drawings, it is evident that persons skilled in the art can readily alter or modify these embodiments without deviating from the true spirit of the invention. The invention encompasses such alterations and modifications as well.

## Claims

1. A network terminal setting information management method for storing user information in a terminal connected to a network and setting information of said terminal matching the user information every time said terminal is used to manage the setting information of said terminal, provided with:
a step of entering user information, and
a step of collating said entered user information with already stored user information, whereby:
the setting information of said terminal stored to match said user information is set in the terminal by replacement if, as a result of said collation, the user information is found identical with already stored user information, or
if, as a result of said collation, the user information is not found identical with already stored user information, setting information matching said user information is acquired from a terminal management server via the network and stored.

2. The network terminal setting information management method according to Claim 1, whereby, when the user information in the terminal is to be stored, it is differentiated into setting information not dependent on the user information and setting information for each unit of user identifying information.

3. An information terminal device to be connected to a network, provided with:
a user information input unit for entering user information,
a user list storage unit for storing said user information,
a user decision unit for collating user information stored in said user list storage unit and the entered user information, and
a setting information storage region for storing setting information to be referenced, matching each user, in executing functions which said terminal has, wherein:
if user information entered as a result of said collation is already present in said user list storage unit, setting information matching the user is read out of the setting information storage region and set in the terminal by replacement, and the setting information is used to connect to the network.

4. The information terminal device according to Claim 3, connectable to a terminal management server via the network, wherein
if said entered user information is not found identical with already stored user information, terminal setting information matching said entered user information is acquired from a terminal management server via the network,
the acquired setting information is set in the terminal by replacement to achieve connection to the network by use of the setting information, and
said acquired setting information is stored into the setting information storage region after completion of the network connection.

5. The information terminal device according to Claim 3, wherein:
the user information input unit is provided with an external storage medium control unit, and
user information is read out of an external storage medium by said external storage medium control unit.

6. The information terminal device according to Claim 3, wherein
the setting information storage region is provided with a function to differentiate, in storing setting information, between setting information not dependent on user information and setting information intrinsic to each user.

7. The information terminal device according to Claim 3, wherein
the user list storage unit also stores a frequency of use of the terminal by each user, and stores setting information of each user into the setting information storage region according to said frequency of use.

8. The information terminal device according to Claim 3, further provided with:
setting information replacement control unit for confirming any vacancy in a capacity of the setting information storage region, wherein
said setting information replacement control unit stores setting information of each user according to said vacancy in capacity.

9. The information terminal device according to Claim 8, wherein a priority in storing setting information ensuing from a user replacement is decided according to a number of times each user has used the information terminal device, the number being held in the user list to be referenced by a user list storage unit, and whether or not to store setting information is determined on the basis of the decision.

10. The information terminal device according to Claim 3, wherein the setting information to be stored in the setting information storage region is managed in linkage with the user list.

11. The information terminal device according to Claim 3, wherein the user list storage unit is provided with, separately from the user list, a group list to be referenced by the user list storage unit, and users in one group are caused to share the setting information in the group by giving group attributes on the user list to a plurality of users of the terminal.

12. A program for causing a computer to function as an information terminal device by executing:
a processing step to accept entry of user information when the terminal is connected to a network,
a processing step to store, every time the terminal is connected to the network, user information of the terminal and the setting information of said terminal matching the user information,
a processing step to collate said entered user information with already stored user information, and
a processing step to set the setting information of said terminal, stored to match said user information, in the terminal by replacement if, as a result of said collation, the user information is found identical with the already stored user information.

13. A program for causing a computer to function as an information terminal device by executing:
a processing step to accept entry of user information when the terminal is connected to a network,
a processing step to store, every time the terminal is connected to the network, user information of the terminal and the setting information of said terminal matching the user information,
a processing step to collate said entered user information with already stored user information, and
a processing step to acquire setting information matching said user information from a terminal management server via the network and to store it if the user information is not found identical with the already stored user information as a result of said collation.
